# EUROPÄISCHE PATENTSCHRIFT

(11) **EP 2 310 707 B1**
(45) Veröffentlichungstag und Bekanntmachung des Hinweises auf die Patenterteilung: **05.12.2012**
(21) Anmeldenummer: 09775921.1
(22) Anmeldetag: 29.06.2009
(51) Int. Cl.: F16D 25/10, F16D 25/08, F16C 33/76, F16D 21/06

(54) **DOPPELKUPPLUNG**
DUAL CLUTCH
EMBRAYAGE DOUBLE

(30) Priorität: 14.07.2008 DE 102008033036
(43) Veröffentlichungstag der Anmeldung: 20.04.2011
(73) Patentinhaber: Schaeffler Technologies AG & Co. KG, 91074 Herzogenaurach (DE)
(72) Erfinder: NÖHL, Oliver, 77830 Bühlertal (DE)
(74) Vertreter: Hoferer, Andreas
(86) Internationale Anmeldenummer: PCT/DE2009/000902
(87) Internationale Veröffentlichungsnummer: WO 2010/006579

(56) Entgegenhaltungen:
- WO-A-2005/119080
- WO-A1-2010/006576
- DE-A1-102006 057 482
- FR-A- 2 797 004
- US-A1- 2006 086 586

## Beschreibung

Die Erfindung betrifft eine Doppelkupplung mit zwei von einer Antriebseinheit angetriebenen Reibungskupplungen mit einem gemeinsamen Kupplungsgehäuse und einer mit diesem fest verbundenen Anpressplatte mit zwei Anpressflächen sowie zwei jeweils einer Anpressfläche zugewandten, axial verlagerbaren Druckplatten.

Doppelkupplungen mit zwei Reibungskupplungen mit einem Kupplungsgehäuse und einer mit diesem fest verbundenen zentralen Anpressplatte sind z.B. aus dem FR 2 797 004 bekannt. Dabei werden die Druckplatten von Betätigungseinrichtungen axial verlagert, indem radial innen axial eine Tellerfeder oder Hebelelemente mit einem vorgegebenen Ausrückweg beaufschlagt werden. Dabei stützen sich diese je nach Ausgestaltung der zugeordneten Reibungskupplung als zwangsweise zugedrückte also zwangsweise geschlossene oder aufgedrückte also zwangsweise geöffnete Reibungskupplung als einarmiger oder zweiarmiger Hebel am Kupplungsgehäuse unter Ausbildung einer Übersetzung ab, so dass der Axialweg der Betätigungseinrichtung länger als der Weg der Druckplatte vom vollständig geöffneten Zustand der Reibungskupplung, in dem kein Moment übertragen wird, zum vollständig geschlossenen Zustand, bei dem das maximale Moment übertragen wird, ist. Insbesondere in beengten Bauräumen müssen die Betätigungseinrichtungen an diesen verlängerten Betätigungsweg angepasst werden.

Weiterhin ist die exakte Zuordnung eines Axialwegs der Betätigungseinrichtung zu einem Weg der Druckplatte und daher eine Zuordnung des über die Reibungskupplung übertragenen Moments von den elastischen Eigenschaften, insbesondere deren Toleranzen, beispielsweise den Fertigungstoleranzen und Abweichungen über die Lebensdauer, abhängig. Hierdurch steigen die durch diese Toleranzen bedingten Axialwege ebenfalls, da die Axialwege auf die größte Abweichung ausgelegt werden müssen. Des Weiteren nimmt die Zuordnung eines Axialwegs zum tatsächlichen Weg der Druckplatte ab beziehungsweise zeigt eine Hysterese.

Es stellt sich daher die Aufgabe, eine Doppelkupplung vorzuschlagen, die verkleinerte Axialwege der Betätigungseinrichtungen aufweist.

Die Aufgabe wird durch eine Doppelkupplung mit zwei von einer Antriebseinheit angetriebenen Reibungskupplungen mit einem gemeinsamen Kupplungsgehäuse und einer mit diesem fest verbundenen Anpressplatte mit zwei Anpfessflächen sowie zwei jeweils einer Anpressfläche zugewandten, axial verlagerbaren Druckplatten gelöst, wobei zwischen jeweils einer Druckplatte und der Anpressplatte Reibbeläge einer mit jeweils einer Getriebeeingangswelle eines Getriebes drehfest verbundenen Kupplungsscheibe zur Bildung eines Reibeingriffs durch axiale Beaufschlagung der Druckplatten mittels jeweils einer Betätigungseinrichtung verspannbar sind und die Druckplatten mittels von den Betätigungseinrichtungen beaufschlagten Übertragungselementen betätigt werden und die Druckplatten um denselben an den Betätigungseinrichtungen eingestellten Betätigungsweg verlagert werden.

Dies bedeutet, dass sich die Übertragungselemente nicht als Hebel an dem Kupplungsgehäuse abstützen sondern in einer im Wesentlichen senkrecht zur Rotationsachse der Doppelkupplung verlaufenden Verlagerung den von den Betätigungseinrichtungen aufgeprägten Axialweg in einen diesem betrags- und richtungskonformen Weg der Druckplatte umsetzen. Dabei sind die Übertragungselemente vorzugsweise als scheibenförmige, steife Kolbenbleche ausgebildet, die an ihrem Innenumfang von den Betätigungseinrichtungen beaufschlagt werden und radial außerhalb die Druckplatte verlagern.

Als Antriebseinheit kann beispielsweise eine Brennkraftmaschine mit einer Kurbelwelle und/oder eine Elektromaschine mit einer Antriebswelle dienen. In Kombination kann ein hybridischer Antrieb vorgesehen sein, bei dem alternativ oder einander ergänzend zumindest eine Brennkraftmaschine und zumindest eine Elektromaschine die Antriebseinheit bilden.

Die beiden Reibungskupplungen sind vorzugsweise trockene Einscheibenkupplungen mit jeweils einer metallischen Reibfläche an der Anpress- und an den Druckplatten sowie Reibbeläge tragende, Gegenreibflächen bildende Kupplungsscheiben. Die Reibbeläge der Kupplungsscheiben sind bevorzugt mit einer Belagfederung ausgestattet, weiterhin werden die Druckplatten axial verlagerbar entgegen der Wirkung von Energiespeichern wie beispielsweise Blattfedern geschlossen, so dass während des Öffnens einer Reibungskupplung die zugehörige Druckplatte in Öffnungsrichtung verlagert wird.

Zumindest eine der beiden Reibungskupplungen ist dabei selbstöffnend ausgestaltet. Dies bedeutet, dass bei einer Entlastung der Betätigungseinrichtung die Reibungskupplung vom geschlossenen in den geöffneten Zustand übergeht. In bevorzugter Weise werden beide Reibungskupplungen als zwangsweise geschlossene, also von der jeweiligen Betätigungseinrichtungen zugedrückte oder zugezogene Reibungskupplung ausgestaltet, so dass beide Reibungskupplungen selbstöffnend sind, sobald eine Betätigungseinrichtung, beispielsweise infolge eines Defekts nicht mehr in Funktion ist.

Die beiden Betätigungseinrichtungen können mittels einer gemeinsamen Aufnahme um die beiden Getriebeeingangswellen angeordnet sein. Hierbei hat es sich als vorteilhaft gezeigt, wenn die Aufnahme verdrehbar am Kupplungsgehäuse aufgenommen und an einem Getriebegehäuse des Getriebes drehfest abgestützt ist. Es kann damit eine gehäusefeste Aufnahme der Betätigungseinrichtungen vorgeschlagen werden, die die Abstützkraft in das Kupplungsgehäuse einleiten, so dass die Doppelkupplung einen in sich geschlossenen Kraftkreislauf der Anpresskräfte und Gegenkräfte zur Verlagerung der Druckplatte und der Ausbildung des Reibschlusses zur Übertragung des Drehmoments von dem Kupplungsgehäuse auf die Kupplungsscheiben bildet. Insoweit ist die Doppelkupplung unabhängig von Toleranzschwankungen, beispielsweise einem Versatz von Kurbelwelle und Getriebeeingangswellen. Hierdurch können die Axialwege exakt ausgelegt und Schwingungen sowie andere Einflüsse, die durch eine Lagerung der Betätigungseinrichtungen am Getriebegehäuse resultieren, beispielsweise der Eintrag von Getriebeschwingungen oder Axialschwingungen der Brerinkraftmaschine, die zu einem Pumpen zwischen der Doppelkupplung und den getriebefest montierten Betätigungseinrichtungen führt, vermieden werden. Ein gegebenenfalls notwendiger Drehschwingungsdämpfer in einer oder beiden Kupplungsscheiben kann daher entfallen.

Weiterhin hat sich als vorteilhaft gezeigt, wenn das Kupplungsgehäuse verdrehbar am Getriebegehäuse abgestützt ist. Hierzu kann das Kupplungsgehäuse dem Getriebe zugewandt einen axialen Ansatz aufweisen, an dem die Aufnahme aufgenommen und mittels dessen die Doppelkupplung am Getriebegehäuse; verdrehbar abgestützt ist. Ein derartiger Ansatz erfolgt bevorzugt radial innen, beispielsweise auf radialer Höhe der Betätigungseinrichtungen, wobei das Kupplungsgehäuse an einem aus dem Getriebegehäuse axial auskragenden Ansatz mittels eines Radiallagers axial fest aufgenommen ist. Zum Ausgleich von Axialschwingungen der Getriebeseite gegenüber der Antriebsseite kann die Doppelkupplung axial begrenzt, vorzugsweise entgegen der Wirkung eines axial wirksamen Energiespeichers direkt an der Kurbelwelle oder unter Zwischenschaltung eines Drehschwingungsdämpfers, beispiels-weise eines Zweimassenschwungrads, drehfest, beispielsweise mittels einer Steckverzahnung aufgenommen sein.

Durch die Abstützung der Doppelkupplung am Getriebegehäuse wird eine Abstützung der Doppelkupplung auf einer der beiden Getriebeeingangswellen vermieden, so dass diese keine Biegebelastung durch die Doppelkupplung erfahren und diesbezüglich keiner separaten Auslegung bedürfen. Weiterhin werden dadurch weder Schwingungen, beispielsweise Taumelschwingungen, vom Getriebe in die Doppelkupplung noch von der Doppelkupplung auf diese Weise in das Getriebe übertragen. Das Getriebe kann ein Getriebe mit einem Haupt- und einem Nebenabtrieb sein. In bevorzugter Weise wird die Doppelkupplung jedoch für ein Doppelkupplungsgetriebe mit zwei Teilantriebssträngen zur Bildung eines Lastschaltgetriebes eingesetzt, bei dem jeweils ein Teilantriebsstrang bei einem eingelegten Gang Moment von der Antriebseinheit bei geschlossener Reibungskupplung auf die Räder eines Kraftfahrzeugs überträgt und in dem anderen Teilantriebsstrang bei geöffneter Reibungskupplung ein nachfolgender Gang eingelegt beziehungsweise nach dem Einlegen im eingelegten Zustand bereitgehalten wird. Eine Schaltung erfolgt durch Überschneidung der beiden Reibungskupplungen der Doppelkupplung, wobei die geschlossene Reibungskupplung schlupfend geöffnet und die geöffnete Reibungskupplung schlupfend geschlossen wird, so dass während der Überschneidung über beiden Teilantriebsstränge wechselnde Teilmomente übertragen werden.

Es hat sich als vorteilhaft gezeigt, wenn beide Reibungskupplungen zwangsweise geschlossene Reibungskupplungen sind, um ein Verblocken des Doppelküpplungsgetriebes bei Ausfall einer Betätigungseinrichtung insbesondere während einer Überschneidungsschaltung zu vermeiden. Aufgrund der vorteilhaften Anordnung einer zentralen Anpressplatte mit gegenüberliegenden Druckplatten der Reibungskupplung werden die Betätigungswege zum Schließen der Reibungskupplungen in ihrer Funktion zueinander entgegengesetzt angeordnet.

Durch die Aufnahme der Doppelkupplung am Getriebegehäuse und den Entfall der Lagerung dieser auf einer der beiden koaxial zueinander angeordneten Getriebeeingangswellen kann die zwischen der Kurbelwelle und der zentralen Anpressplatte angeordnete Betätigungseinrichtung geführt, angeordnet oder versorgt werden. Dies bedeutet, dass ungestört von einer Lagerung der Doppelkupplung im Raum zwischen Getriebeeingangswellen und den radial außen angeordneten, den Reibeingriff bildenden Elementen wie Druckplatten und Anpressplatte sowie axial zwischen den Kupplungsscheiben und dem Getriebegehäuse ein zusammenhängender Bauraum zur Aufnahme der beiden, bevorzugt in einer Aufnahme aufgenommenen Betätigungseinrichtungen bereitgestellt werden kann. In vorteilhafter Weise kann hierzu die der Aufnahme benachbarte Kupplungsscheibe axial beabstandet zu den Reibbelägen auf der als Hohlwelle ausgeführten, zugehörigen Getriebeeingangswelle aufgenommen sein, so dass der Bauraum zusätzlich vergrößert werden kann.

Die Betätigungseinrichtungen können mechanische Hebelvorrichtungen sein, die von radial außen beispielsweise elektromotorisch betrieben werden. Besonders vorteilhaft ist eine pneumatische oder bevorzugt hydrostatische Betätigung der Doppelkupplung, wobei die gemeinsame Aufnahme der Betätigungseinrichtungen durch ein Nehmerzylindergehäuse, in dem zur Beaufschlagung jeweils eines Überträgungselements jeweils ein von außen druckbeaufschlagter Nehmerzylinder untergebracht ist, gebildet wird. Die Nehmerzylinder weisen hierzu jeweils einen Ringkolben auf, der axial in einer von außen druckbeaufschlagbaren Druckkammer verlagerbar ist und unter Zwischenschaltung eines Betätigungslagers die Übertragungselemente betätigt.

Die Druckkammern der Nehmerzylinder werden beispielsweise von jeweils einem Geberzylinder, der mittels eines Elektromotors von einem Steuergerät gesteuert wird, oder von einer Pumpe, gegebenenfalls unter Mitwirkung eines Druckspeichers, beaufschlagt, wobei die Pumpe von der Antriebseinheit oder von einem Elektromotor betrieben werden kann. In vorteilhafter Weise kann ein sogenanntes Powerpack eingesetzt werden, das über eine zentrale Pumpe und entsprechenden Ventilen mehrere Druckkreisläufe schaltet, wobei beide Reibungskupplungen betätigt werden und die Beschaltung des Getriebes und die Umlaufschmierung des unten beschriebenen Ringraums erfolgen können.

Infolge der direkten Betätigung der Druckplatten ohne eine Hebelübersetzung der Übertragungselemente werden die Betätigungslager hohen Belastungen ausgesetzt. Infolgedessen entsteht eine hohe Reibungswärme insbesondere bei einer hohen Anzahl von Kupplungsvorgängen, beispielsweise im Stadtverkehr, in den Betätigungslagern, die insbesondere bei fettbefüllten, gekapselten Betätigungslagern schlecht abgeführt werden kann. Es wird daher vorgeschlagen, zwischen den Übertragungselementen und dem Nehmerzylinder einen nach außen abgedichteten Ringraum auszubilden, der die Betätigungslager zumindest einseitig umfasst. Dabei wird der Ringraum zumindest teilweise mit einem Fluid befüllt, so dass das Kühlvolumen der Betätigungslager zunimmt. Dabei kann das Fluid den Anforderungen entsprechend schmierende und/oder kühlende Eigenschaften aufweisen.

Der Ringraum kann nach außen beispielsweise mit einer Umwälzeinrichtung, beispielsweise einer Pumpe, verbunden sein, die das in dem Ringraum vorhandene Fluid umwälzt. Hierzu kann eine Zu- und Ableitung vorgesehen sein. In vorteilhafter Weise wird im Ringraum dasselbe Fluid wie Druckmittel wie in den Nehmerzylindern zur Druckversorgung dieser verwendet, so dass gegebenenfalls auftretende Leckagen eines oder beider Nehmerzylinder in den Ringraum oder umgekehrt für die Zusammensetzung des Fluids unerheblich ist. Es besteht auch die Möglichkeit, den Ringraum mit dem Getriebeölsumpf verbunden sein. Die Umwälzung kann mittels einer von der Antriebseinheit angetriebenen Pumpe oder einer selbstständigen, beispielsweise mittels eines Elektromotors angetriebenen Pumpeneinheit (Powerpack) erfolgen.

Weiterhin kann Fluid im Ringraum vernebelt werden, wobei es insbesondere den erwärmten Betätigungslagern Verdunstungswärme entzieht und diese dadurch abkühlt. Alternativ kann in einfachen Ausgestaltungsbeispielen bereits eine Vergrößerung des Volumens des Ringraums mit einem dadurch erhöhten Schmiermittelgehalt wie Fett oder Öl zu einer ausgeglichenen Wärmebilanz der Betätigungslager führen.

In einem vorteilhaften Ausführungsbeispiel wird der Ringraumzwischen den Übertragungselementen und den gegenüber dem Nehmerzylinder abgedichteten Ringkolben durch radial außerhalb von den Wälzkörpern abgedichtete Betätigungslager abgedichtet. Dabei sind die Lagerringe, beispielsweise Innenring und Außenring, so gegeneinander abgedichtet, dass die Wälzkörper sowie die Reib- beziehungsweise Abwälzflächen der zugehörigen Lagerringe im Ringraum angeordnet sind. Die Dichtlinie verläuft dabei vom Innenumfang des Nehmerzylindergehäuses über die Innenfläche der Ringkolben, die Innenseite der Betätigungslager zu den Übertragungselementen.

Zwischen den Übertragungselementen, die in vorteilhafter Weise als dichte Kolbenbleche ausgestaltet sind, und dem Kupplungsgehäuse ist der Ringraum mittels axial verlagerbarer Dichtbleche abgedichtet. Die Dichtbleche sind dabei an einem der axial gegeneinander verlagerbaren Bauteile, beispielsweise einem Übertragungselement oder dem Kupplungsgehäuse, fest angebracht wie dicht verschweißt und weisen eine Dichtfläche zu dem axial gegenüber diesem verlagerbaren Bauteil auf. In besonders vorteilhafter Weise kann eine Dichtfläche aus einem Lagerring, beispielsweise einem radial außen vorgesehenen Lagerring gebildet sein, der axial fest mit dem Übertragungselement verbunden ist und daher axial verlagerbar gegenüber dem Kupplungsgehäuse oder ein an diesem fest angeordneten Bauteil abgedichtet werden kann.

Die Dichtbleche sind dabei vorteilhafterweise hülsenförmig ausgebildet, wobei ein axialer Endbereich mit einem Innenumfang eines Übertragungselements, dem Kupplungsgehäuse oder einem mit diesen verbundenen Bauteil axial fest und dichtend verbunden ist und ein gegenüberliegender axialer Endbereich gegenüber einem Innenumfang eines korrespondierenden, axial zu diesem verlagerbaren Übertragungsteil, dem Kupplungsgehäuse oder einem mit diesen verbundenen Bauteil mittels einer Dichtung axial verlagerbar abgedichtet ist.

Zur Bildung einer hülsenförmigen Dichtfläche an dem Kupplungsgehäuse kann an dem axialen Ansatz, mittels dessen die Doppelkupplung am Getriebegehäuse aufgenommen ist, ein hülsenförmiges Bauteil axial fest und abgedichtet aufgenommen sein, das gegenüber einem einen axialen Ansatz aufweisenden Lagerring oder einem in anderer Weise an dem Übertragungselement oder dem Betätigungslager abgedichtet ist. An diesem Bauteil kann anstatt an dem axialen Ansatz direkt das Stützlager zur Aufnahme des Nehmerzylinders aufgenommen sein, so dass dieses ebenfalls in dem Ringraum angeordnet ist und daher vom Fluid des Ringraums geschmiert und gegebenenfalls gekühlt wird.

Die Beaufschlagung der Druckkammern der Nehmerzylinder kann jeweils mittels einer Druckleitung mit Druck erfolgen, wobei die entsprechenden Druckversorgungseinrichtungen wie Geberzylinder oder Pumpe mit dieser Druckleitung verbunden sind. Dabei kann die Leitung durch das Getriebe geführt sein. Insbesondere bei Verwendung einer Pumpe kann ein Ventilblock zur Steuerung des Drucks an die einzelnen Nehmerzylinder vorzugsweise in Verbindung mit einem Ventilblock zur Steuerung des Getriebes in der benachbarten Getriebewandung untergebracht sein, so dass lediglich eine Druckversorgungsleitung in den gemeinsamen Ventilblock vorgesehen werden muss und von dort direkt eine Druckleitung aus dem Getriebe in die Nehmerzylinder erfolgen kann. In ähnlicher Weise kann die Umwälzung des Ringraums über eine Zuleitung und Ableitung aus dem Getriebegehäuse permanent oder beispielsweise abhängig von der Temperatur des Fluids gesteuert werden.

Das Nehmerzylindergehäuse weist eine Drehmomentstütze gegenüber dem Getriebegehäuse auf, die das Nehmerzylindergehäuse vor einer Verdrehung infolge der Schleppmomente der Betätigungslager, des Stützlagers und der Dichtungen der Ringkolben schützt. Hierzu kann zwischen Nehmerzylindergehäuse und Getriebegehäuse ein Formschluss in Umfangsrichtung vorgesehen sein, beispielsweise einer in eine Ausnehmung eingreifende Nase. Alternativ kann die Drehmomentstütze zumindest aus einer der Druckleitungen, der Zu- und/oder Ableitung gebildet werden.

In gleicher Weise ist neben einer Doppelkupplung auch eine einfache Reibungskupplung mit einem von einer Antriebseinheit angetriebenen Kupplungsgehäuse und einer mit diesem fest verbundenen Anpressplatte mit einer Anpressflächen sowie einer dieser Anpressfläche zugewandten, axial verlagerbaren Druckplatte von dem erfinderischen Gedanken umfasst, wobei zwischen der Druckplatte und der Anpressplatte Reibbeläge einer mit einer Getriebeeingangswelle eines Getriebes drehfest verbundenen Kupplungsscheibe zur Bildung eines Reibeingriffs durch axiale Beaufschlagung der Druckplatte mittels einer Betätigungseinrichtung verspannbar sind, die Druckplatte mittels einem von der Betätigungseinrichtung beaufschlagten Übertragungselement betätigt wird und die Druckplatte um denselben an den Betätigungseinrichtungen eingestellten Betätigungsweg verlagert wird. Weiterhin kann die Betätigungseinrichtung verdrehbar mittels eines Stützlagers aufgenommen sein und das Stützlager sowie ein zwischen der Betätigungseinrichtung und dem Übertragungselement vorgesehenes Betätigungslagers in einem gemeinsamen Ringraum aufgenommen sein. Weitere vorteilhafte Ausgestaltungen können entsprechend den Ausführungen für die Doppelkupplung auch für die Einfachkupplung vorgesehen werden, wobei die Abdichtung der Ringkammer anstatt einer flexiblen Ausgestaltung für den zweiten Nehmerzylinder starr, beispielsweise mittels eines Dichtblechs erfolgen kann.

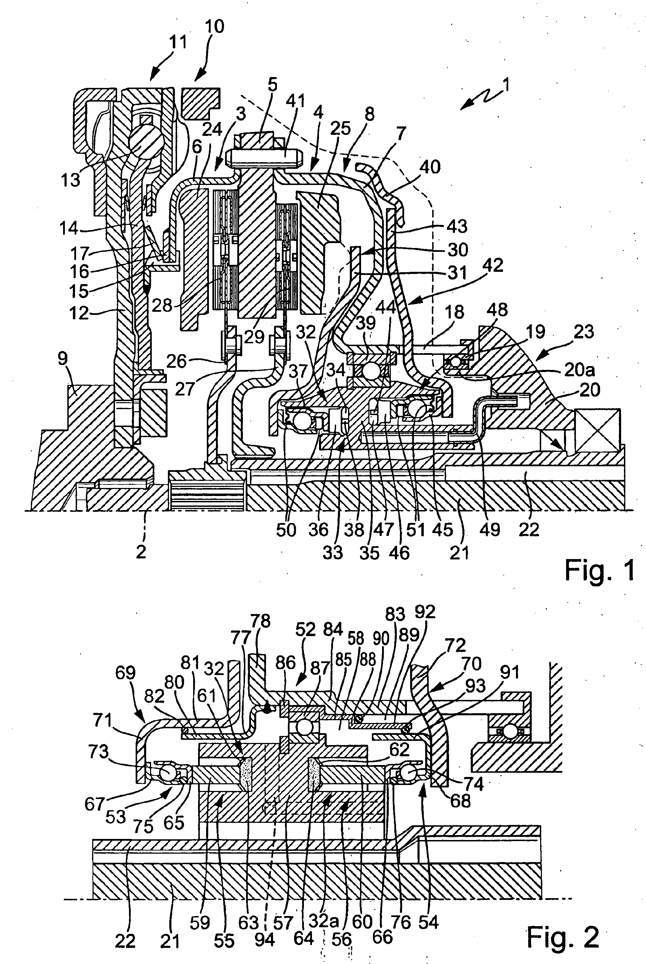

Die Erfindung wird anhand der Figuren 1 und 2 näher erläutert. Dabei zeigen:
- Figur 1: einen Teilschnitt durch ein Ausführungsbeispiel einer Doppelkupplung und
- Figur 2: einen Ausschnitt der Doppelkupplung der Figur 1 mit einem geänderten Bereich der Betätigungseinrichtungen.

Figur 1 zeigt eine Doppelkupplung 1 im Teilschnitt oberhalb deren Rotationsachse 2. Die Doppelkupplung 1 enthält zwei Reibungskupplungen 3, 4, die eine gemeinsame zentrale Anpressplatte 5 aufweisen, die mit den Gehäuseteilen 6, 7 des Kupplungsgehäuses 8 fest verbunden ist. Das Kupplungsgehäuse 8 wird von der Kurbelwelle 9 einer nicht näher dargestellten Brennkraftmaschine angetrieben. Hierzu ist in dem gezeigten Ausführungsbeispiel ein Drehschwingungsdämpfer 10 - hier in Form eines Zweimassenschwungrads 11 - mit einem Eingangsteil 12 mit der Kurbelwelle 9 verbunden. Das entgegen der Wirkung der Energiespeicher 13 gegenüber dem Eingangsteil 12 begrenzt verdrehbare Ausgangsteil 14 weist ein axial vorspringendes Verzahnungsprofil 15 auf, in das ein komplementäres Verzahnungsprofil 16, beispielsweise wie gezeigt eine Innenverzahnung des Gehäuseteils 6 eingreift. Die Doppelkupplung 1 ist dabei gegenüber der Kurbelwelle 9 und gegen den Drehschwingungsdämpfer 10 mittels eines axial wirksamen Energiespeichers 17, beispielsweise einer Tellerfeder, in dem gezeigten Ausführungsbeispiel gegenüber dem Ausgangsteil 4 des Drehschwingungsdämpfers 10 verspannt. In weiteren Ausführungsbeispielen kann die Verspannung gegenüber der Antriebsseite genauso an anderen Bauteilen erfolgen wie die Verzahnung des Gehäuseteils 6.

Das Kupplungsgehäuse 8 stützt sich gegen die Wirkung des Energiespeichers 17 getriebeseitig mittels eines axialen Ansatzes 18 des Gehäuseteils 7 ab. Dieser ist verdrehbar und axial fest mittels eines an einem axialen Ansatz 20a des Getriebegehäuses 20 angeordneten Loslagers 19 aufgenommen. Hierdurch ist die Doppelkupplung 1 sowohl antriebsseitig als auch getriebeseitig aufgenommen beziehungsweise radial abgestützt. Achsversätze zwischen der Kurbelwelle 9 und den Getriebeeingangswellen 21, 22 des Getriebes 23, das ein Doppelkupplungsgetriebe sein kann, sowie von Verbrennungsprozessen herrührende Axial- und Taumelschwingungen der Doppelkupplung 1 werden in vorteilhafter Weise mittels einer Verspannung eines geringen Spiels der der Verzahnungsprofile 15, 16 gegeneinander ausgeglichen.

Radial innerhalb des Kupplungsgehäuses 8 sind zur Bildung der Reibungskupplungen 3, 4 jeweils Druckplatten 24, 25 vorgesehen, die mittels nicht dargestellter Blattfedern die Druckplatten 24 drehfest mit dem Kupplungsgehäuse 8, beispielsweise den Gehäuseteilen 6, 7 verbinden und die Druckplatten in Öffnungsposition der Reibungskupplungen 3, 4 halten. Zwischen der Anpressplatte 5 und den Druckplatten 24, 25 ist jeweils eine Kupplungsscheibe 26, 27 mit Reibbelägen 28, 29 zur Bildung eines Reibeingriffs der Reibungskupplungen 3, 4 vorgesehen. Die Kupplungsscheiben 26, 27 sind mit den Getriebeeingangswellen 21, 22 drehfest verbunden, beispielsweise verzahnt.

Die Druckplatte 25 der Reibungskupplung 4 wird von einem Übertragungselement 30 in Form eines hier dargestellten Kolbenblechs 31 zur Bildung eines wegabhängigen Reibeingriffs zwischen der Druckplatte 25 und der Anpressplatte 5 andererseits mit den Reibbelägen 29 der Kupplungsscheibe 27 axial beaufschlagt. Die Beaufschlagung erfolgt mittels der Betätigungseinrichtung 32 in Form eines von außen mit Druck beaufschlagten Nehmerzylinders 33 mit einem eine Druckkammer 34 bildenden Nehmerzylindergehäuse 35, in dem ein axial abhängig vom in der Druckkammer 34 anliegenden Druck verlagerbarer Ringkolben 36 aufgenommen ist. Zwischen Ringkolben 36 und Kolbenblech 31 ist ein Betätigungslager 37 aufgenommen, so dass eine Drehzahlentkoppelung zwischen dem feststehenden Ringkolben 36 und dem drehenden Kolbenblech 31 ermöglicht wird.

Das Kolbenblech 31 ist steif ausgebildet und stützt sich in dem gezeigten Ausführungsbeispiel mittels eines am Kolben 36 vorgesehenen Stegs 38 oder über den Umfang verteilten Bolzen bei vollständig geöffneter Reibungskupplung 4 am Nehmerzylindergehäuse 35 ab. Das Kolbenblech 31 überträgt einen vom Ringkolben 36 vorgegebenen Axialweg betrags- und richtungskonform auf die Druckplatte 25. Infolgedessen ergibt sich keine Übersetzung zwischen Druckplatte 25 und Ringkolben 36, so dass der Hub des Ringkolbens 36 im Wesentlichen und allenfalls unter Berücksichtigung des Verschleißes der Reibbeläge und der Fertigungstoleranzen auf den Hub der Druckplatte 25 vom vollständigen eingerückten bis zum vollständig ausgerückten Zustand der Reibungskupplung 4 begrenzt werden kann. Infolgedessen kann der axiale Bauraum des Nehmerzylinders 33 verkürzt werden.

Das Nehmerzylindergehäuse 35 ist mittels des Stützlagers 39 axial fest und verdrehbar am Kupplungsgehäuse 8 - wie hier gezeigt am Innenumfang des axialen Ansatzes 18 aufgenommen. Mittels einer nicht dargestellten Drehmomentstütze stützt sich das Nehmerzylindergehäuse 35 getriebeseitig ab und steht dadurch fest. Durch den geschlossenen Kraftkreislauf innerhalb der Doppelkupplung 1 während eines Betätigungsvorgangs der Reibungskupplung 25 ist die Doppelkupplung 1 unabhängig von äußeren Einflüssen und kann daher besonders präzise ausgerückt werden. Hierzu stützt sich das Nehmerzylindergehäuse 35 über das Stützlager 39 am Kupplungsgehäuse 8 ab, der Ringkolben 36 stützt sich am Nehmerzylindergehäuse 35 ab und beaufschlagt die Druckplatte 25, die gegen die am Kupplungsgehäuse 8 befestigte Anpressplatte 5 verspannt wird, so dass sich ein sehr kurzer Kraftkreislauf ergibt.

In ähnlicher Weise und unter Ausnutzung derselben Vorteile wird die Reibungskupplung 3 betätigt. Zur Verlagerung der Druckplatte 24 wird diese von über den Umfang verteilten Zugankern 40, die in Umfangsrichtung zwischen den Nieten 41 angeordnet entsprechende, nicht dargestellte Gehäuseausschnitte der Gehäuseteile 6, 7 durchgreifen und die Druckplatte 24 übergreifen, beaufschlagt. Die Zuganker 40 werden außerhalb des Kupplungsgehäuses 8 von dem ebenfalls steifen Übertragungselement 42 wie Kolbenblech 43, das durch Ausschnitte des axialen Ansatzes 18 greift, axial beaufschlagt. Das Kolbenblech 43 weist nicht näher dargestellte Ausschnitte auf, die Ausschnitte des axialen Ansatzes durchgreifen. Am Innenumfang des Kolbenblechs 43 greift das Betätigungslager 45 an, das vom Ringkolben 46, der in der Druckkammer 47 des Nehmerzylinders 48 axial verlagerbar geführt ist, beaufschlagt wird. Mittels eines Stegs 44 stützt sich das Übertragungsblech 43 im geöffneten Zustand der Reibungskupplung 4 am Nehmerzylindergehäuse 35 ab.

Die beiden Nehmerzylinder 33, 48 sind in einem einzigen ringförmigen Nehmerzylindergehäuse 35 angeordnet, wobei die Ringkolben 36, 46 an den sich gegenüberliegenden Seiten des Nehmerzylindergehäuses 35 axial angeordnet sind. Die Druckzuführung für die Druckkammern 34, 47 erfolgt mittels zwischen dem Getriebegehäuse 20 und dem Nehmerzylindergehäuse 35 geführte über den Umfang verteilte Druckleitungen, wobei im gezeigten Schnitt lediglich eine Druckleitung 49 sichtbar ist. Über die Druckleitungen werden die Druckkammern 34, 47 gesteuert und mit Druck beaufschlagt. Ein mittels eines Druckmittels auf die Druckkammern 34, 47 übertragener Druck kann mittels eines Geberzylinders oder mittels einer Pumpe bereitgestellt werden, wobei bei einer Verwendung einer Pumpe entsprechende Steuerventile den auf die Nehmerzylinder 33, 48 zu überträgenden Druck steuern.

Infolge der Betätigung der Druckplatten 24, 25 ohne Übersetzung sind die auf die Betätigungslager 37, 45 sowie auf das Stützlager 39 wirkenden Kräfte entsprechend hoch. Insbesondere die Betätigungslager werden daher auf hohe Kräfte und hohe Betriebstemperaturen infolge innerer Reibung der Lager ausgelegt. Insbesondere sind die Betätigungslager mit Spezialfett befüllt und mittels der Dichtscheiben 50, 51 gegen ein Austreten des Fetts geschützt.

Figur 2 zeigt einen Ausschnitt der in Figur 1 dargestellten Doppelkupplung 1 mit einem veränderten Betätigungssystem 52 der beiden Reibungskupplungen 3, 4 (Figur 1) mit den Betätigungseinrichtungen 32, 32a. Zur verbesserten Kühlung und Schmierung der Betätigungslager 53, 54 ist innerhalb des an dem den Getriebeeingangswellen 21, 22 abgewandten Innenumfang des beide Nehmerzylinder 55, 56 enthaltenden Nehmerzylindergehäuses 57 ein Ringraum 58 nach außen dichtend abgegrenzt. Der Ringraum 58 wird durch die an den Ringkolben 59, 60 angeordneten Dichtungen wie Nutringdichtungen 61, 62 gegenüber den Druckkammern 63, 64 abgedichtet.

Die Innenringe 65, 66 der Betätigungslager 53, 54 sind jeweils dicht mit den Ringkolben 59, 60 verbunden, die radial äußeren Lagerringe 67, 68 sind jeweils mit den Übertragungselementen 69, 70 wie Kolbenblechen 71, 72 verbunden. Die Lagerringe 67, 68 sind gegenüber den Lagerringen 65, 66 mittels radial außerhalb der Wälzkörper 73, 74 der Betätigungslager 53, 54 mittels Ringdichtungen 75, 76 abgedichtet. Hierdurch können neben den Innenflächen der Lagerringe 65, 66, 67, 68 auch die Wälzkörper 73, 74 direkt in Kontakt mit dem in den Ringraum 58 eingebrachten Fluid wie Öl oder Fett in Kontakt treten und daher vom bereitgestellten großen Volumen des Fluids effektiv geschmiert und gekühlt werden.

Zur Abdichtung des Kolbenblechs 71 gegenüber dem Kupplungsgehäuse 78 ist ein hülsenförmiges Dichtblech 77 am Kupplungsgehäuse 78 dicht befestigt und gegenüber einem parallel zu einem axialen Ansatz 80 des Dichtblechs 77 angeordneten axialen Abschnitts 81 mittels einer Ringdichtung 82 abgedichtet. Bei einer Verlagerung der Übertragungseinrichtung 69 bei einer Betätigung der Reibungskupplung gleitet die Ringdichtung 82 auf dem Innenumfang des Abschnitts 81 oder auf dem Außenumfang des Ansatzes 80, je nachdem an welchem der beiden Bauteile die Ringdichtung 82 festgelegt ist.

Zur Abdichtung des Kupplungsgehäuses 78 gegenüber dem Übertragungselement 70 ist der axiale Ansatz 83 gegenüber dem axialen Ansatz 18 der Figur 1 radial gestuft ausgebildet. Am Innenumfang der Stufe 84 ist ein ebenso gestuftes Dichtblech 85 angeordnet, das axial zwischen der Stufe 85 und einem Anschlagring 86 des Stützlagers 87 festgelegt ist. Das Stützlager 87 ist dabei auf dem Dichtblech 85 aufgenommen. Eine weitere Stufe 88 des Dichtblechs 85 sieht einen Radialspalt 89 zwischen dem Dichtblech 85 und dem axialen Ansatz 83 vor, in den eine Ringdichtung 90 zur Abdichtung des Dichtblechs 85 gegenüber dem Kupplungsgehäuse 78 eingebracht ist. Die axial verlagerbare Abdichtung des Dichtblechs 85 gegenüber dem Übertragungselement 70 erfolgt durch den dicht mit dem Kolbenblech 2 verbundenen Lagerring 68 des Betätigungslagers 54. Dieser übergreift das Betätigungslager 54 radial innen axial und bildet einen axialen Ansatz 91 aus, der von einem radial außerhalb des Ansatzes 92 angeordneten, am Dichtblech 85 angeformten axialen Ansatz 92 axial überlagert wird, wobei zwischen den Ansätzen 91, 92 eine Ringdichtung 93 angeordnet ist. Bei einer Verlagerung des Übertragungselements 70 nach einer Beaufschlagung durch den Ringkolben 60 verlagern sich die jeweils hülsenförmigen Ansätze 91, 92 axial gegeneinander. Abhängig von der Festlegung der Ringdichtung gleitet diese dabei auf einer der beiden Ringflächen der Ansätze 91, 92.

Durch die beschriebenen Abdichtungen ist der Ringraum 58 nach außen abgedichtet und kann ein größeres Volumen an Schmiermittel für die Betätigungslager 53, 54 und das Stützlager 87 aufnehmen. Alternativ kann das im Ringraum 58 vorhandene, als Schmiermittel dienende Fluid mittels einer Zuleitung 54 und eine nicht dargestellte Ableitung umgewälzt werden. Hierzu kann in einem weiteren Hydraulikkreis die zur Betätigung der Nehmerzylinder 55, 56 vorgesehene Pumpe verwendet werden. Alternativ kann im Ringraum 58 eine Sprühbenebelung der zu schmierenden und zu kühlenden Oberflächen angewendet werden.

### Bezugszeichenliste

- 1: Doppelkupplung
- 2: Rotationsachse
- 3: Reibungskupplung
- 4: Reibungskupplung
- 5: Anpressplatte
- 6: Gehäuseteil
- 7: Gehäuseteil
- 8: Kupplungsgehäuse
- 9: Kurbelwelle
- 10: Drehschwingungsdämpfer
- 11: Zweimassenschwungrad
- 12: Eingangsteil
- 13: Energiespeicher
- 14: Ausgangsteil
- 15: Verzahnungsprofil
- 16: Verzahnungsprofil
- 17: Energiespeicher
- 18: axialer Ansatz
- 19: Lager
- 20: Getriebegehäuse
- 20a: Ansatz
- 21: Getriebeeingangswelle
- 22: Getriebeeingangswelle
- 23: Getriebe
- 24: Druckplatte
- 25: Druckplatte
- 26: Kupplungsscheibe
- 27: Kupplungsscheibe
- 28: Reibbelag
- 29: Reibbelag
- 30: Übertragungselement
- 31: Kölbenblech
- 32: Betätigungseinrichtung
- 32a: Betätigungseinrichtung
- 33: Nehmerzylinder
- 34: Druckkammer
- 35: Nehmerzylindergehäuse
- 36: Ringkolben
- 37: Betätigungslager
- 38: Steg
- 39: Stützlager
- 40: Zuganker
- 41: Niet
- 42: Übertragungselement
- 43: Kolbenblech
- 44: Steg
- 45: Betätigungslager
- 46: Ringkolben
- 47: Druckkammer
- 48: Nehmerzylinder
- 49: Druckleitung
- 50: Dichtscheibe
- 51: Dichtscheibe
- 52: Betätigungssystem
- 53: Betätigungslager
- 54: Betätigungslager
- 55: Nehmerzylinder
- 56: Nehmerzylinder
- 57: Nehmerzylindergehäuse
- 58: Ringraum
- 59: Ringkolben
- 60: Ringkolben
- 61: Nutringdichtung
- 62: Nutringdichtung
- 63: Druckkammer
- 64: Druckkammer
- 65: Lagerring
- 66: Lagerring
- 67: Lagerring
- 68: Lagerring
- 69: Übertragungselement
- 70: Übertragungselement
- 71: Kolbenblech
- 72: Kolbenblech
- 73: Wälzkörper
- 74: Wälzkörper
- 75: Ringdichtung
- 76: Ringdichtung
- 77: Dichtblech
- 78: Kupplungsgehäuse
- 80: Ansatz
- 81: Abschnitt
- 82: Ringdichtung
- 83: axialer Ansatz
- 84: Stufe
- 85: Dichtblech
- 86: Anschlagring
- 87: Stützlager
- 88: Stufe
- 89: Ringspalt
- 90: Ringdichtung
- 91: axialer Ansatz
- 92: axialer Ansatz
- 93: Ringdichtung
- 94: Zuleitung

## Patentansprüche

1. Doppelkupplung (1) mit zwei von einer Antriebseinheit angetriebenen Reibungskupplungen (3, 4) mit einem gemeinsamen Kupplungsgehäuse (8, 78) und einer mit diesem fest verbundenen Anpressplatte (5) mit zwei Anpressflächen sowie zwei jeweils einer Anpressfläche zugewandten, axial verlagerbaren Druckplatten (24, 25), wobei zwischen jeweils einer Druckplatte (24, 25) und der Anpressplatte (5) Reibbeläge (28, 29) jeweils einer mit jeweils einer Getriebeeingangswelle (21, 22) eines Getriebes (23) drehfest verbundenen Kupplungsscheibe (26, 27) zur Bildung eines Reibeingriffs durch axiale Beaufschlagung der Druckplatten (24, 25) mittels jeweils einer Betätigungseinrichtung (32, 32a) verspannbar sind, **dadurch gekennzeichnet, dass** die beiden Reibungskupplungen trockene Einscheibenkupplungen mit jeweils einer metallischen Reibfläche an der Anpress- und an den Druckplatten sowie Reibbeläge tragenden Gegenreibflächen bildender Kupplungsscheiben sind und dass die Druckplatten (24, 25) mittels von den Betätigungseinrichtungen (32, 32a) beaufschlagten Übertragungselementen (30, 42, 69, 70) betätigt werden und die Druckplatten (24, 25) um denselben an den Betätigungseinrichtungen (32, 32a) eingestellten Betätigungsweg verlagert werden.

2. Doppelkupplung (1) nach Anspruch 1, **dadurch gekennzeichnet, dass** beide Betätigungseinrichtungen (32, 32a) mittels einer gemeinsamen Aufnahme um die beiden Getriebeeingangswellen (21, 22) angeordnet sind.

3. Doppelkupplung (1) nach Anspruch 2, **dadurch gekennzeichnet, dass** die Aufnahme verdrehbar am Kupplungsgehäuse (8) aufgenommen und an einem Getriebegehäuse (20) des Getriebes (23) drehfest abgestützt ist.

4. Doppelkupplung (1) nach einem der Ansprüche 1 bis 3, **dadurch gekennzeichnet, dass** das Kupplungsgehäuse (8) verdrehbar an einem Getriebegehäuse (20) abgestützt ist.

5. Doppelkupplung (1) nach einem der Ansprüche 1 bis 4, **dadurch gekennzeichnet, dass** das Kupplungsgehäuse (8) dem Getriebe (23) zugewandt einen axialen Ansatz (18, 83) aufweist, an dem die Aufnahme aufgenommen und mittels dessen die Doppelkupplung (1) am Getriebegehäuse (20) verdrehbar abgestützt ist.

6. Doppelkupplung (1) nach Anspruch 4 oder 5, **dadurch gekennzeichnet, dass** das Kupplungsgehäuse (8) an einem aus dem Getriebegehäuse (20) axial auskragenden Ansatz (20a) mittels eines Loslagers (19) axial fest und gegenüber dem Getriebegehäuse (20) verdrehbar aufgenommen ist.

7. Doppelkupplung (1) nach einem der Ansprüche 1 bis 6, **dadurch gekennzeichnet, dass** zumindest eine der Reibungskupplungen (3, 4) eine zwangsweise geschlossene Reibungskupplung ist.

8. Doppelkupplungen (1) nach einem der Ansprüche 1 bis 6, **dadurch gekennzeichnet, dass** beide Reibungskupplungen (3, 4) zwangsweise geschlossene Reibungskupplungen sind, wobei die Betätigungswege zum Schließen dieser entgegengesetzt gerichtet sind.

9. Doppelkupplung (1) nach einem der Ansprüche 1 bis 8, **dadurch gekennzeichnet, dass** die Betätigungseinrichtungen (32, 32a) hydrostatisch betrieben werden.

10. Doppelkupplung (1) nach Anspruch 9, **dadurch gekennzeichnet, dass** die gemeinsame Aufnahme der Betätigungseinrichturigen (32, 32a) ein Nehmerzylindergehäuse (35, 57) ist, in dem zur Beaufschlagung jeweils eines Übertragungselements (30, 42, 69, 70) jeweils ein außen druckbeaufschlagter Nehmerzylinder (33, 48, 55, 56) untergebracht ist.

11. Doppelkupplung (1) nach Anspruch 10, **dadurch gekennzeichnet, dass** die Nehmerzylinder (33, 48, 55, 56) jeweils einen Ringkolben (36, 46, 59, 60) aufweisen, der axial in einer von außen druckbeaufschlagbaren Druckkammer (34, 47, 63, 64) verlagerbar ist und unter Zwischenschaltung eines Betätigungslagers (37, 45, 53, 54) die Übertragungselemente (30, 42, 69, 70) betätigt.

12. Doppelkupplung (1) nach einem der Ansprüche 10 oder 11, **dadurch gekennzeichnet, dass** zwischen den Übertragungselementen (69, 70) und dem Nehmerzylindergehäuse (57) ein nach außen abgedichteter Ringraum (58) gebildet ist.

13. Doppelkupplung (1) nach Anspruch 12, **dadurch gekennzeichnet, dass** der Ringraum (58) zumindest teilweise mit einem Fluid befüllt ist.

14. Doppelkupplung (1) nach Anspruch 13, **dadurch gekennzeichnet, dass** das Fluid schmierende und/oder kühlende Eigenschaften aufweist.

15. Doppelkupplung (1) nach Anspruch 13 oder 14, **dadurch gekennzeichnet, dass** das Fluid von einer außerhalb des Ringraums (58) angeordneten Pumpe umgewälzt wird.

16. Doppelkupplung (1) nach Anspruch 13 oder 14, **dadurch gekennzeichnet, dass** das Fluid in dem Ringraum (58) vernebelt wird.

17. Doppelkupplung (1) nach einem der Ansprüche 12 bis 16, **dadurch gekennzeichnet, dass** der Ringraum (58) zwischen den Übertragungselementen (69, 70) und den gegenüber dem Nehmerzylindergehäuse (57) abgedichteten Ringkolben (59, 60) durch radial außerhalb von Wälzkörpern (73, 74) abgedichtete Betätigungslager (53, 54) abgedichtet ist.

18. Doppelkupplung (1) nach einem der Ansprüche 12 bis 17, **dadurch gekennzeichnet, dass** der Ringraum (58) zwischen den Kolbenbleche (71, 72) bildenden Übertragungselementen (69, 70) und dem Kupplungsgehäuse (78) mittels axial verlagerbaren Dichtblechen (77, 85) radial abgedichtet sind.

19. Doppelkupplung (1) nach Anspruch 18, **dadurch gekennzeichnet, dass** zumindest ein Dichtblech von einem Lagerring eines Betätigungslagers (54) gebildet ist.

20. Doppelkupplung (1) nach Anspruch 19, **dadurch gekennzeichnet, dass** der Lagerring ein radial außen vorgesehener Lagerring (68) ist.

21. Doppelkupplung (1) nach einem der Ansprüche 18 bis 20, **dadurch gekennzeichnet, dass** die Dichtbleche (77, 85) hülsenförmig ausgebildet sind, wobei ein axialer Endbereich mit einem Innenumfang eines Übertragungselements (69), dem Kupplungsgehäuse (78) oder einem mit diesen verbundenen Bauteil axial fest und dichtend verbunden ist und ein gegenüberliegender axialer Endbereich gegenüber einem Innenumfang eines korrespondierenden, axial zu diesem verlagerbaren Übertragungsteil, dem Kupplungsgehäuse (78) oder einem mit diesen verbundenen Bauteil mittels einer Ringdichtung (82, 93) axial verlagerbar abgedichtet ist.

22. Doppelkupplung (1) nach Anspruch 21, **dadurch gekennzeichnet, dass** an dem axialen Ansatz (83) des Kupplungsgehäuses (78) ein hülsenförmiges Dichtblech (85) axial fest und abgedichtet aufgenommen ist, das gegenüber einem einen axialen Ansatz (91) aufweisenden Lagerring eines Betätigungslagers (54) axial verlagerbar abgedichtet ist.

23. Doppelkupplung (1) nach einem der Ansprüche 12 bis 22, **dadurch gekennzeichnet, dass** ein Stützlager (87) zur verdrehbaren Aufnahme des Nehmerzylindergehäuses (57) auf dem axialen Ansatz (83) oder dem mit dem Kupplungsgehäuse (78) verbundenen hülsenförmigen Dichtblech (85) aufgenommen ist.

24. Doppelkupplung (1) nach einem der Ansprüche 11 bis 23, **dadurch gekennzeichnet, dass** die Druckammern (34, 47, 63, 64) der Nehmerzylinder (33, 48, 55, 56) jeweils mittels einer aus dem Getriebegehäuse (20) führenden Druckleitung (49) mit Druck beaufschlagt werden.

25. Doppelkupplung (1) nach Anspruch 24, **dadurch gekennzeichnet, dass** der Druck durch eine Getriebepumpe, einen Geberzylinder oder eine elektrische Pumpeneinheit bereitgestellt wird.

26. Doppelkupplung (1) nach Anspruch 15 bis 17, **dadurch gekennzeichnet, dass** der Ringraum (58) mittels einer Pumpe über eine Zuleitung (94) und Ableitung aus dem Getriebegehäuse (20) umgewälzt wird.

27. Doppelkupplung (1) nach einem der Ansprüche 10 bis 26, **dadurch gekennzeichnet, dass** das Nehmerzylindergehäuse (35, 57) eine Drehmomentstütze gegenüber dem Getriebegehäuse (20) aufweist.

28. Doppelkupplung (1) nach Anspruch 27, **dadurch gekennzeichnet, dass** die Drehmomentstütze zumindest aus einer der Druckleitungen (49), der Zu- und/oder Ableitung gebildet wird.

## Claims

1. Double clutch (1) having two friction clutches (3, 4) which are driven by a drive unit, with a common clutch housing (8, 78) and a pressing plate (5) which is fixedly connected to the said clutch housing (8, 78) with two pressing faces and two axially displaceable pressure plates (24, 25) which in each case face a pressing face, it being possible for friction linings (28, 29) of in each case one clutch plate (26, 27) which is connected fixedly to in each case one transmission input shaft (21, 22) of a transmission (23) so as to rotate with it to be clamped between in each case one pressure plate (24, 25) and the pressing plate (5) in order to form a frictional engagement by axial loading of the pressure plates (24, 25) by means of in each case one actuating device (32, 32a), **characterized in that** the two friction clutches are dry single-disc clutches with in each case one metallic friction face on the pressing plates and on the pressure plates and clutch discs which form corresponding friction faces which carry friction linings, and **in that** the pressure plates (24, 25) are actuated by means of transmission elements (30, 42, 69, 70) which are loaded by the actuating devices (32, 32a), and the pressure plates (24, 25) are displaced by the same actuating travel which is set on the actuating devices (32, 32a).

2. Double clutch (1) according to Claim 1, **characterized in that** both actuating devices (32, 32a) are arranged around the two transmission input shafts (21, 22) by means of a common receptacle.

3. Double clutch (1) according to Claim 2, **characterized in that** the receptacle is received rotatably on the clutch housing (8) and is supported fixedly on a transmission housing (20) of the transmission (23) so as to rotate with it.

4. Double clutch (1) according to one of Claims 1 to 3, **characterized in that** the clutch housing (8) is supported rotatably on a transmission housing (20).

5. Double clutch (1) according to one of Claims 1 to 4, **characterized in that**, facing the transmission (23), the clutch housing (8) has an axial projection (18, 83), on which the receptacle is received and by means of which the double clutch (1) is supported rotatably on the transmission housing (20).

6. Double clutch (1) according to Claim 4 or 5, **characterized in that** the clutch housing (8) is received axially fixedly and rotatably with respect to the transmission housing (20) by means of a floating bearing (19) on a projection (20a) which projects axially out of the transmission housing (20).

7. Double clutch (1) according to one of Claims 1 to 6, **characterized in that** at least one of the friction clutches (3, 4) is a normally-closed friction clutch.

8. Double clutch (1) according to one of Claims 1 to 6, **characterized in that** both friction clutches (3, 4) are normally-closed friction clutches, the actuating paths for closing them being directed in opposite directions.

9. Double clutch (1) according to one of Claims 1 to 8, **characterized in that** the actuating devices (32, 32a) are operated hydrostatically.

10. Double clutch (1) according to Claim 9, **characterized in that** the common receptacle of the actuating devices (32, 32a) is a slave cylinder housing (35, 57), in which in each case one slave cylinder (33, 48, 55, 56) which is loaded with pressure from the outside is accommodated in order to load in each case one transmission element (30, 42, 69, 70).

11. Double clutch (1) according to Claim 10, **characterized in that** the slave cylinders (33, 48, 55, 56) have in each case one annular piston (36, 46, 59, 60) which can be displaced axially in a pressure chamber (34, 47, 63, 64) which can be loaded with pressure from the outside, and actuates the transmission elements (30, 42, 69, 70) with an actuating bearing (37, 45, 53, 54) being connected in between.

12. Double clutch (1) according to either of Claims 10 and 11, **characterized in that** an annular space (58) which is sealed to the outside is formed between the transmission elements (69, 70) and the slave cylinder housing (57).

13. Double clutch (1) according to Claim 12, **characterized in that** the annular space (58) is filled at least partially with a fluid.

14. Double clutch (1) according to Claim 13, **characterized in that** the fluid has lubricating and/or cooling properties.

15. Double clutch (1) according to Claim 13 or 14, **characterized in that** the fluid is circulated by a pump which is arranged outside the annular space (58).

16. Double clutch (1) according to Claim 13 or 14, **characterized in that** the fluid is atomized in the annular space (58).

17. Double clutch (1) according to one of Claims 12 to 16, **characterized in that** the annular space (58) between the transmission elements (69, 70) and the annular pistons (59, 60) which are sealed with respect to the slave cylinder housing (57) is sealed by actuating bearings (53, 54) which are sealed radially outside rolling bodies (73, 74).

18. Double clutch (1) according to one of Claims 12 to 17, **characterized in that** the annular space (58) between the transmission elements (69, 70), which form piston plates (71, 72), and the clutch housing (78) is sealed radially by means of axially displaceable sealing plates (77, 85).

19. Double clutch (1) according to Claim 18, **characterized in that** at least one sealing plate is formed by a bearing ring of an actuating bearing (54).

20. Double clutch (1) according to Claim 19, **characterized in that** the bearing ring is a bearing ring (68) which is provided radially on the outside.

21. Double clutch (1) according to one of Claims 18 to 20, **characterized in that** the sealing plates (77, 85) are of sleeve-shaped configuration, an axial end region being connected in an axially fixed and sealing manner to an inner circumference of a transmission element (69), the clutch housing (78) or a component which is connected to them, and an axial end region which lies on the opposite side is sealed in an axially displaceable manner by means of an annular seal (82, 93) with respect to an inner circumference of a corresponding transmission part which can be displaced axially with respect thereto, the clutch housing (78) or a component which is connected to them.

22. Double clutch (1) according to Claim 21, **characterized in that** a sleeve-shaped sealing plate (85) is received in an axially fixed and sealed manner on the axial projection (83) of the clutch housing (78), which sealing plate (85) is sealed in an axially displaceable manner with respect to a bearing ring of an actuating bearing (54), which bearing ring has an axial projection (91).

23. Double clutch (1) according to one of Claims 12 to 22, **characterized in that** a supporting bearing (87) for rotatably receiving the slave cylinder housing (57) is received on the axial projection (83) or the sleeve-shaped sealing plate (85) which is connected to the clutch housing (78).

24. Double clutch (1) according to one of Claims 11 to 23, **characterized in that** the pressure chambers (34, 47, 63, 64) of the slave cylinders (33, 48, 55, 56) are in each case loaded with pressure by means of a pressure line (49) which leads out of the transmission housing (20).

25. Double clutch (1) according to Claim 24, **characterized in that** the pressure is provided by a gear pump, a master cylinder or an electric pump unit.

26. Double clutch (1) according to Claims 15 to 17, **characterized in that** the annular space (58) is circulated by means of a pump via a feed line (94) and a discharge line out of the transmission housing (20).

27. Double clutch (1) according to one of Claims 10 to 26, **characterized in that** the slave cylinder housing (35, 57) has a torque support with respect to the transmission housing (20).

28. Double clutch (1) according to Claim 27, **characterized in that** the torque support is formed at least from one of the pressure lines (49), the feed line and/or discharge line.

## Revendications

1. Embrayage double (1) comprenant deux embrayages à friction (3, 4) entraînés par une unité d'entraînement avec un boîtier d'embrayage commun (8, 78) et un plateau de pressage (5) connecté fixement à celui-ci avec deux faces de pressage ainsi que deux plaques de pression (24, 25) déplaçables axialement et tournées vers une surface de pressage respective, des garnitures de friction (28, 29) d'un disque d'embrayage (26, 27) connecté de manière solidaire en rotation à chaque fois à un arbre d'entrée de boîte de vitesses (21, 22) d'une boîte de vitesses (23) pouvant être serrées entre une plaque de pression (24, 25) respective et le plateau de pressage (5) pour former un engagement par friction par sollicitation axiale des plaques de pression (24, 25) au moyen d'un dispositif d'actionnement respectif (32, 32a), **caractérisé en ce que** les deux embrayages à friction sont des embrayages à disque unique secs avec à chaque fois une surface de friction métallique sur le plateau de pressage et sur les plaques de pression ainsi que des disques d'embrayage formant des surfaces de friction conjuguées portant des garnitures de friction, et **en ce que** les plaques de pression (24, 25) sont actionnées au moyen d'éléments de transfert (30, 42, 69, 70) sollicités par les dispositifs d'actionnement (32, 32a) et les plaques de pression (24, 25) sont déplacées des mêmes courses d'actionnement ajustées au niveau des dispositifs d'actionnement (32, 32a).

2. Embrayage double (1) selon la revendication 1, **caractérisé en ce que** les deux dispositifs d'actionnement (32, 32a) sont disposés au moyen d'un logement commun autour des deux arbres d'entrée de boîte de vitesses (21, 22).

3. Embrayage double (1) selon la revendication 2, **caractérisé en ce que** le logement est reçu de manière rotative sur le boîtier d'embrayage (8) et est supporté de manière solidaire en rotation sur un boîtier de boîte de vitesses (20) de la boîte de vitesses (23).

4. Embrayage double (1) selon l'une quelconque des revendications 1 à 3, **caractérisé en ce que** le boîtier d'embrayage (8) est supporté de manière rotative sur un boîtier de boîte de vitesses (20).

5. Embrayage double (1) selon l'une quelconque des revendications 1 à 4, **caractérisé en ce que** le boîtier d'embrayage (8) présente un épaulement axial (18, 83) tourné vers la boîte de vitesses (23) sur lequel est reçu le logement est au moyen duquel l'embrayage double (1) est supporté de manière rotative sur le boîtier de boîte de vitesses (20).

6. Embrayage double (1) selon la revendication 4 ou 5, **caractérisé en ce que** le boîtier d'embrayage (8) est reçu fixement axialement au moyen d'un palier fou (19) sur un épaulement (20a) saillant axialement hors du boîtier de boîte de vitesses (20) et est reçu de manière rotative par rapport au boîtier de boîte de vitesses (20).

7. Embrayage double (1) selon l'une quelconque des revendications 1 à 6, **caractérisé en ce qu'**au moins l'un des embrayages à friction (3, 4) est un embrayage à friction fermé par force.

8. Embrayage double (1) selon l'une quelconque des revendications 1 à 6, **caractérisé en ce que** les deux embrayages à friction (3, 4) sont des embrayages à friction fermés par force, les courses d'actionnement pour la fermeture de ces derniers étant orientés en sens contraire.

9. Embrayage double (1) selon l'une quelconque des revendications 1 à 8, **caractérisé en ce que** les dispositifs d'actionnement (32, 32a) sont entraînés de manière hydrostatique.

10. Embrayage double (1) selon la revendication 9, **caractérisé en ce que** le logement commun des dispositifs d'actionnement (32, 32a) est un boîtier de cylindre récepteur (35, 57), dans lequel est à chaque fois monté un cylindre récepteur (33, 48, 55, 56) sollicité en pression depuis l'extérieur, en vue de la sollicitation d'un élément de transfert respectif (30, 42, 69, 70).

11. Embrayage double (1) selon la revendication 10, **caractérisé en ce que** les cylindres récepteurs (33, 48, 55, 56) présentent à chaque fois un piston annulaire (36, 46, 59, 60) qui peut être déplacé axialement dans une chambre de pression (34, 47, 63, 64) pouvant être sollicitée en pression depuis l'extérieur, et qui actionne les éléments de transfert (30, 42, 69, 70) par interposition d'un palier d'actionnement (37, 45, 53, 54).

12. Embrayage double (1) selon l'une quelconque des revendications 10 ou 11, **caractérisé en ce qu'**entre les éléments de transfert (69, 70) et le boîtier de cylindre récepteur (57) est formé un espace annulaire (58) étanché vers l'extérieur.

13. Embrayage double (1) selon la revendication 12, **caractérisé en ce que** l'espace annulaire (58) est rempli au moins en partie de fluide.

14. Embrayage double (1) selon la revendication 13, **caractérisé en ce que** le fluide présente des propriétés lubrifiantes et/ou refroidissantes.

15. Embrayage double (1) selon la revendication 13 ou 14, **caractérisé en ce que** le fluide est entraîné en circulation par une pompe disposée à l'extérieur de l'espace annulaire (58).

16. Embrayage double (1) selon la revendication 13 ou 14, **caractérisé en ce que** le fluide dans l'espace annulaire (58) est nébulisé.

17. Embrayage double (1) selon l'une quelconque des revendications 12 à 16, **caractérisé en ce que** l'espace annulaire (58) entre les éléments de transfert (69, 70) et le piston annulaire (59, 60) étanché vis-à-vis du boîtier de cylindre récepteur (57) est étanché par des paliers d'actionnement (53, 54) étanchés radialement à l'extérieur de corps de roulement (73, 74).

18. Embrayage double (1) selon l'une quelconque des revendications 12 à 17, **caractérisé en ce que** l'espace annulaire (58) entre les éléments de transfert (69, 70) formant des tôles de piston (71, 72) et le boîtier d'embrayage (78) est étanché radialement au moyen de tôles d'étanchéité (77, 85) déplaçables axialement.

19. Embrayage double (1) selon la revendication 18, **caractérisé en ce qu'**au moins une tôle d'étanchéité est formée par une bague de palier d'un palier d'actionnement (54).

20. Embrayage double (1) selon la revendication 19, **caractérisé en ce que** la bague de palier est une bague de palier (68) prévue radialement à l'extérieur.

21. Embrayage double (1) selon l'une quelconque des revendications 18 à 20, **caractérisé en ce que** les tôles d'étanchéité (77, 85) sont réalisées en forme de douille, une région d'extrémité axiale étant connectée de manière hermétique et fixée axialement à une périphérie intérieure d'un élément de transfert (69), au boîtier d'embrayage (78) ou à un composant connecté à celui-ci, et une région d'extrémité axiale opposée étant étanchée au moyen d'un joint d'étanchéité annulaire (82, 93) de manière déplaçable axialement par rapport à une périphérie intérieure d'une pièce de transfert correspondante, déplaçable axialement par rapport à celle-ci, par rapport au boîtier d'embrayage (78) ou par rapport à un composant connecté à celui-ci.

22. Embrayage double (1) selon la revendication 21, **caractérisé en ce qu'**une tôle d'étanchéité (85) en forme de douille est reçue de manière hermétique et fixée axialement sur l'épaulement axial (83) du boîtier d'embrayage (78), laquelle tôle d'étanchéité est étanchée de manière déplaçable axialement par rapport à une bague de palier d'un palier d'actionnement (54) présentant un épaulement axial (91).

23. Embrayage double (1) selon l'une quelconque des revendications 12 à 22, **caractérisé en ce qu'**un palier de support (87) pour recevoir de manière rotative le boîtier de cylindre récepteur (57) est reçu sur l'épaulement axial (83) ou sur la tôle d'étanchéité (85) en forme de douille connectée au boîtier d'embrayage (78).

24. Embrayage double (1) selon l'une quelconque des revendications 11 à 23, **caractérisé en ce que** les chambres de pression (34, 47, 63, 64) des cylindres récepteurs (33, 48, 55, 56) sont à chaque fois sollicitées en pression avec une conduite de pression (49) conduisant hors du boîtier de boîte de vitesses (20).

25. Embrayage double (1) selon la revendication 24, **caractérisé en ce que** la pression est fournie par une pompe à engrenage, un maître-cylindre ou une unité de pompe électrique.

26. Embrayage double (1) selon les revendications 15 à 17, **caractérisé en ce que** l'espace annulaire (58) est parcouru par un écoulement au moyen d'une pompe par le biais d'une conduite d'alimentation (94) et par évacuation hors du boîtier de boîte de vitesses (20).

27. Embrayage double (1) selon l'une quelconque des revendications 10 à 26, **caractérisé en ce que** le boîtier de cylindre récepteur (35, 57) présente un support de couple par rapport au boîtier de boîte de vitesses (20).

28. Embrayage double (1) selon la revendication 27, **caractérisé en ce que** le support de couple est formé d'au moins l'une des conduites de pression (49), de la conduite d'alimentation et/ou de la conduite d'évacuation.
